# EUROPÄISCHE PATENTSCHRIFT

(11) **EP 2 024 213 B1**
(45) Veröffentlichungstag und Bekanntmachung des Hinweises auf die Patenterteilung: **10.05.2017**
(21) Anmeldenummer: 07725335.9
(22) Anmeldetag: 16.05.2007
(51) Int. Cl.: B60T 17/02, F04B 49/02

(54) **DRUCKLUFTVERSORGUNGSEINRICHTUNG FÜR EIN NUTZFAHRZEUG**
COMPRESSED AIR SUPPLY SYSTEM FOR A UTILITY VEHICLE
SYSTÈME D'ALIMENTATION EN AIR COMPRIMÉ POUR UN VÉHICULE UTILITAIRE

(30) Priorität: 19.05.2006 DE 102006023632
(43) Veröffentlichungstag der Anmeldung: 18.02.2009
(73) Patentinhaber: KNORR-BREMSE Systeme für Nutzfahrzeuge GmbH, 80809 München (DE)
(72) Erfinder: FRIES, Ansgar, 80993 München (DE); HILBERER, Eduard, 68766 Hockenheim (DE)
(74) Vertreter: Mattusch, Gundula
(86) Internationale Anmeldenummer: PCT/EP2007/004421
(87) Internationale Veröffentlichungsnummer: WO 2007/134797

(56) Entgegenhaltungen:
- EP-A- 1 386 811
- DE-A1- 3 923 882
- DE-A1- 19 834 705
- DE-A1- 19 936 283

## Beschreibung

Die vorliegende Erfindung betrifft eine Druckluftversorgungseinrichtung für ein Nutzfahrzeug, mit einem durch einen Antrieb über eine pneumatisch schaltbare Kupplung antreibbaren Kompressor und einem durch ein elektrisches Signal betätigbaren Ventil zum wahlweisen Zuführen von Druckluft zu einem Schalteingang der Kupplung.

Für Nutzfahrzeuge sind Druckluftversorgungseinrichtungen von zentraler Bedeutung. Insbesondere das Bremssystem eines pneumatisch gebremsten Nutzfahrzeugs benötigt Druckluft, ebenso wie zahlreiche weitere Verbraucher, beispielsweise Luftfederungen oder Liftachseinrichtungen. Die von der Druckluftversorgungseinrichtung aufzubereitende und zu verteilende Druckluft wird von einem Kompressor geliefert, der im Allgemeinen durch den Verbrennungsmotor des Nutzfahrzeugs angetrieben wird. Ein diesbezüglich gängiges Konzept sieht vor, den Kompressor über eine pneumatisch schaltbare Kupplung mit dem Verbrennungsmotor zu koppeln, wobei die Druckluft für die pneumatische Ansteuerung der Kupplung wiederum der Druckluftversorgungseinrichtung entnommen wird. Ein Beispiel für eine derartige Einrichtung ist in der DE 39 23 882 C2 angegeben.

Weiterhin ist aus der DE 198 34 705 A1 eine Druckluftversorgungseinrichtung bekannt, die einen über einen pneumatischen Schalteingang schaltbaren Energiesparkompressor aufweist.

Durch die Schaltbarkeit der Kupplung kann der Kompressorbetrieb bedarfsweise unterbrochen werden, beispielsweise während der Regenerationsphasen der Filtereinheit. Ebenso ist die Entkopplung des Kompressors von der Verbrennungsmaschine in Hinblick auf den Energiehaushalt des Nutzfahrzeugs gezielt einsetzbar.

Die Realisierung eines Konzepts mit schaltbarer Kupplung ist jedoch nicht in allen Aspekten unproblematisch. Insbesondere soll die Kupplung zu geeigneten Zeitpunkten in den jeweils erwünschten Zustand überführt werden, wobei die Eignung dieser Zeitpunkte von zahlreichen Faktoren abhängen kann. Diese Faktoren können in unmittelbarem Zusammenhang mit Verbrennungsmotor, Kupplung und/oder Kompressor stehen. Im Hinblick auf den Verbrennungsmotor sind insbesondere der aktuelle Lastzustand sowie der Energieverbrauch zu berücksichtigen. Bei der Kupplung ist deren Funktionfähigkeit zu berücksichtigen. Bezüglich des Kompressors sind unerwünschte Überhitzungszustände zu vermeiden. Die genannten Faktoren betreffen aber auch die Druckluftaufbereitung und hier insbesondere die im Bereich der Druckluftaufbereitungsanlage vorliegenden Drücke und Temperaturen sowie die eventuelle Notwendigkeit einer Regeneration der Filtereinheit.

Der Erfindung liegt die Aufgabe zugrunde, eine Druckluftversorgungseinrichtung mit schaltbarer Kupplung auf der Grundlage eines kostengünstigen und besonders funktionsfähigen Konzeptes unter Berücksichtigung einer Vielzahl die Druckluftaufbereitung betreffender Faktoren zur Verfügung zu stellen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass das elektrische Signal von einer elektronischen Steuerung zur Verfügung gestellt wird, der einen Betriebszustand einer Druckluftaufbereitungsanlage und sonstige Fahrzeugzustände kennzeichnende Signale zuführbar sind. Die Entscheidung zum Umschalten der Kupplung kann somit unter Einbeziehung sämtlicher Informationen getroffen werden, die der elektronischen Steuerung zur Verfügung gestellt werden. Da diese Informationen im Allgemeinen nicht auf die Druckluftaufbereitung beschränkt sind, sondern aufgrund der Verwendung der modernen Fahrzeugelektronik auch sonstige Informationen betreffen, die beispielsweise von einem Fahrzeugführungsrechnen einem CAN-Bus zugeführt werden, kann eine an alle wichtigen Parameter angepasste Kupplungssteuerung erfolgen.

Gemäß einer besonders vorteilhaften Ausführungsform der Erfindung ist vorgesehen, dass die elektronische Steuerung in eine Druckluftaufbereitungsanlage integriert ist. Dies ist in der Praxis realisierbar, indem die herkömmliche elektronische Steuerung der Druckluftaufbereitungsanlage um die Funktionalität der Kupplungsansteuerung erweitert wird.

Es ist aber auch denkbar, dass die elektronische Steuerung über eine Schnittstelle mit einer in eine Druckluftaufbereitungsanlage integrierten Steuerung kommuniziert. Auf dieser Grundlage kann die herkömmliche elektronische Steuerung der Druckluftaufbereitungsanlage weitgehend unverändert bleiben, und die Schaltungsfunktionalität für die Kupplung kann extern zur Verfügung stehen.

Ebenfalls nützlich kann vorgesehen sein, dass das elektrische Signal von einer elektronischen Steuerung zur Verfügung gestellt wird, die druckabhängige Eingangssignale empfängt. Das Signal des Druckschalters wird somit zunächst einer elektronischen Steuerung zugeführt, die dann gegebenenfalls das Signal für das Ventil ausgibt. Dies hat den Vorteil, dass andere im Nutzfahrzeug vorliegende Parameter im Hinblick auf den Umschaltvorgang der Kupplung berücksichtigt werden können.

Beispielsweise kann vorgesehen sein, dass das elektrische Signal von einer elektronischen Steuerung zur Verfügung gestellt wird, die temperaturabhängige Eingangssignale empfängt. So kann etwa die Temperatur im Bereich des Kompressors gemessen werden, um bei erhöhter Temperatur ein Entkoppeln des Kompressors vom Verbrennungsmotor zu bewirken.

Ebenso ist es möglich, dass das elektrische Signal von einer elektronischen Steuerung zur Verfügung gestellt wird, die von der eingangs- und/oder ausgangsseitigen Drehzahl der Kupplung abhängige Eingangssignale empfängt. Auch eine Überwachung der Drehzahlen im Bereich der Kupplung kann nützlich sein, beispielsweise im Hinblick auf eine Fehlerdiagnose.

Die erfindungsgemäße Druckluftversorgungseinrichtung kann beispielsweise so ausgelegt sein, dass ein zusätzliches elektrisches Signal von einem Druckschalter zur Verfügung gestellt wird, der auf einen Druck in einer Druckluftaufbereitungsanlage anspricht. Ein Grund für die Entkopplung von Verbrennungsmotor und Kompressor kann im Vorliegen eines ausreichenden Drucks innerhalb der Druckluftaufbereitungsanlage beziehungsweise im Bereich der Verbraucheranschlüsse bestehen. Folglich ist es nützlich, diesen Druck in ein elektrisches Signal umzusetzen, welches dann wiederum das Entkoppeln von Verbrennungsmotor und Kompressor bewirkt. Bei entsprechender Abstimmung von Druckschalter und Ventil kann das Signal dem Ventil direkt oder unter Vermittlung weiterer elektrischer oder elektronischer Bauteile zugeführt werden.

Erfindungsgemäß ist vorgesehen, dass das Ventil im Bereich einer Frischluftzuführung zu dem Kompressor angeordnet ist. Im Bereich des Verbrennungsmotors herrschen hohe Temperaturen, so dass die Schaltorgane, das heißt insbesondere pneumatisch oder/und elektrisch ansteuerbare Ventile in entsprechender Weise ausgelegt werden müssen, was mit entsprechend hohen Kosten verbunden ist. Im Bereich der Luftzuführung zu dem Kompressor, das heißt insbesondere an dessen Ansaugstutzen, herrschen vergleichsweise niedrige Temperaturen, so dass ein Ventil ohne besondere Berücksichtigung der Temperaturbeständigkeit eingesetzt werden kann. Zusätzlich ergibt sich durch die genannte Anordnung der Vorteil, dass zwischen dem Ventil und der schaltbaren Kupplung ein besonders kurzer Leitungsweg vorgesehen sein kann, was die Umschaltzeiten der Kupplung verkürzt. Dies ist insbesondere bei Anlagen von Vorteil, die eine häufige Umschaltung der Kupplung bewirken sollen.

Nützlicherweise ist vorgesehen, dass das Ventil ein elektrisch vorsteuerbares Pneumatikventil ist. Ein solches Ventil ermöglicht aufgrund des großen erzielbaren Luftdurchsatzes einen raschen Druckaufbau am Schaltorgan der Kupplung, so dass auch diese Maßnahme die Schaltgeschwindigkeit erhöht.

Gemäß einer besonders vorteilhaften Ausführungsform der Erfindung ist vorgesehen, dass die dem Schalteingang über das Ventil zugeführte Druckluft einer Druckluftaufbereitungsanlage über ein Rückschlagventil entnommen wird. Um eine hohe Schaltgeschwindigkeit bei einem Pneumatikventil sicherzustellen, ist die Zuleitung zu einem Pneumatikventil vorzugsweise auf einem gewissen Druckniveau zu halten. Beim Öffnen des Ventils steht damit sogleich ein ausreichender Druck an, der dann über die kurze Leitung zur Kupplung auch rasch das Umschalten der Kupplung bewirken kann. Da die Druckluft zum Umschalten der Kupplung vorzugsweise einer Druckluftaufbereitungsanlage entnommen wird, die auch andere Verbraucher mit Druckluft versorgt, wird ein während des Belüftungsvorgangs ausreichendes Druckniveau in der zu dem Pneumatikventil führenden Leitung häufig durch einen zusätzlichen Druckvorratsbehälter sichergestellt. Dieser ist entbehrlich, wenn die dem Schalteingang über das Ventil zugeführte Druckluft über ein Rückschlagventil entnommen wird, denn dieses verhindert einen Druckabbau in der Druckzuführleitung aufgrund sonstiger Effekte im Bereich der Druckluftaufbereitungsanlage und der daran angeschlossenen Verbraucher.

Gemäß einer bevorzugten Ausführungsform kann vorgesehen sein, dass das Rückschlagventil in die Druckluftaufbereitungsanlage integriert ist. Ein wesentlicher Bestandteil der Druckluftaufbereitungsanlage ist ein mindestens eine Kreisschutzeinrichtung aufweisendes Ventilgehäuse, das die Einbindung eines weiteren Rückschlagventils durch die Bewältigung einer lediglich konstruktiven Aufgabe ohne weiteres ermöglicht. Ebenso ist aber auch die externe Anordnung des Rückschlagventils denkbar.

Die Erfindung betrifft weiterhin ein Nutzfahrzeug mit einer erfindungsgemäßen Druckluftversorgungseinrichtung.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer erfindungsgemäßen Druckluftversorgungseinrichtung;
- Figur 2: eine schematische Darstellung einer erfindungsgemäßen Druckluftversorgungseinrichtung; und
- Figur 3: eine schematische Darstellung einer erfindungsgemäßen Druckluftversorgungseinrichtung.

Bei der nachfolgenden Beschreibung der Zeichnungen bezeichnen gleiche Bezugszeichen gleiche oder vergleichbare Komponenten.

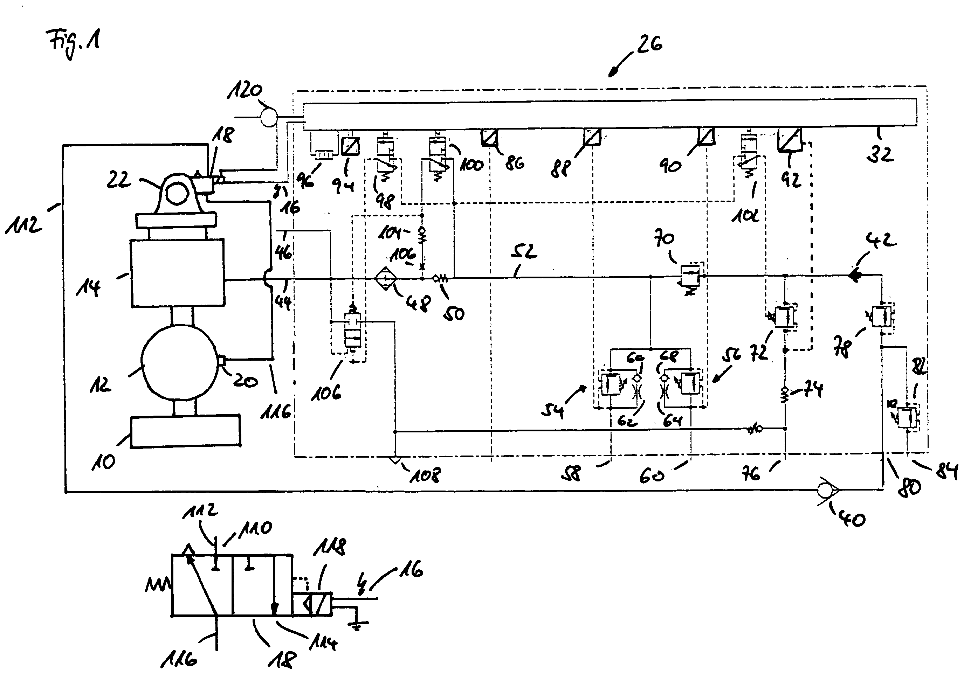

Figur 1 zeigt eine schematische Darstellung einer erfindungsgemäßen Druckluftversorgungseinrichtung. Es ist eine Druckluftaufbereitungsanlage 26 dargestellt. Mit dieser wird zugeführte Druckluft gefiltert und an verschiedene Druckluftverbraucher verteilt. Es ist ein Eingangsanschluss 44 vorgesehen, der mit einem außerhalb der Druckluftaufbereitungsanlage 26 vorgesehenen Kompressor 14 in Verbindung steht. Parallel zu dem Eingangsanschluss 44 ist ein Fremdbefüllungsanschluss 46 angeordnet. Die einem der Eingänge 44, 46 zugeführte Druckluft wird einer Filtereinheit 48 und von dort über ein Rückschlagventil 50 einer Hauptversorgungsleitung 52 zugeführt. An der Hauptversorgungsleitung 52 sind zwei Überströmventile 54, 56 parallel angeordnet, über die Anschlüsse 58, 60 für Betriebsbremskreise des Nutzfahrzeugs mit Druckluft beliefert werden. Parallel zu den Überströmventilen sind jeweils eine Drossel 62, 64 und ein Rückschlagventil 66, 68 angeordnet, wobei gemäß der vorliegenden Ausführungsform eine zur Strömung durch die Überströmventile 54, 56 parallele Strömung von der Hauptversorgungsleitung 52 zu den Anschlüssen 58, 60 der Betriebsbremskreise ermöglicht wird. Hierdurch kann insbesondere bei der Neubefüllung des Systems auch bei niedrigen Drücken in der Hauptversorgungsleitung 52 eine frühzeitige Befüllung der Betriebsbremskreisbehälter stattfinden. Ebenso ist es möglich, die Rückschlagventile unter Verzicht dieses Neubefüllungsvorteils in umgekehrter Richtung vorzusehen. Hierdurch wird dann eine Nachbefüllung von Nebenverbrauchern aus den Behältern der Betriebsbremskreise ermöglicht. In der Hauptversorgungsleitung 52 ist weiterhin ein Druckbegrenzer 70 vorgesehen. Auf der druckbegrenzten Seite des Druckbegrenzers 70 zweigen zwei weitere Leitungen parallel ab, wobei durch eine Leitung über ein Überströmventil 72 und ein Rückschlagventil 74 ein Anschluss 76 für die Feststellbremse und die Anhängerbremsanlage beliefert wird. Die andere Leitung beliefert über ein Rückschlagventil 42 und ein Überströmventil 78 einen Anschluss 80, der für die Betätigung der Kompressorkupplung 12 vorgesehen ist. Dem Überströmventil 78 ist ein weiteres Überströmventil 82 in einer abzweigenden Leitung nachgeordnet, über das ein weiterer Nebenverbraucheranschluss 84 beliefert wird.

Mit der elektronischer Steuerung 32 stehen mehrere Drucksensoren 86, 88, 90, 92 in Verbindung, wobei der Drucksensor 88 den Druck am Betriebsbremsanschluss 58, der Drucksensor 90 den Druck am Betriebsbremsanschluss 60 und der Drucksensor 62 den Druck unmittelbar hinter dem Überströmventil 72 für den Anschluss 76 von Feststellbremse und Anhänger misst. Mit der elektronischer Steuerung 32 stehen weiterhin ein Temperatursensor 94 und eine Heizung 96 in Verbindung. Weiterhin sind an die elektronische Steuerung 32 drei Magnetventile 98, 100, 102 angeschlossen, das Druckreglermagnetventil 98, das Regenerationsmagnetventil 100 und ein Magnetventil 102 zur Druckzusatzsteuerung des Überströmventils 72. Die Magnetventile 78, 100, 102 sind als 3/2-Wegeventile ausgelegt und alle im stromlosen Zustand geschlossen. Im geschlossen Zustand steht der Druck der Hauptversorgungsleitung 52 an den Eingängen der Magnetventile 98, 100, 102 an. Zur Einleitung eines Regenerationsvorganges ist es erforderlich das Regenerationsmagnetventil 100 und das Druckreglermagnetventil 98 zu bestromen und somit in ihren nicht dargestellten Zustand zu überführen. Dies hat zur Folge, dass den Betriebsbremsbehältern über die Hauptversorgungsleitung 52 trockene Druckluft entnommen wird, die dann unter Umgehung des Rückschlagventils 50 über das Regenerationsmagnetventil 100 ein weiteres Rückschlagventil 104 und eine Drossel 106, die Filtereinheit 48 in umgekehrter Richtung durchströmt, um dann über ein aufgrund der Umschaltung des Druckreglermagnetventils 98 in seine nicht dargestellte Schaltstellung umgeschaltetes Ablassventil 106 zu einem Ablass 108 und von dort in die Atmosphäre abzuströmen. Außerhalb der Druckluftaufbereitungsanlage 26 sind der bereits erwähnte Kompressor 14, ein Verbrennungsmotor 10 und eine dem Kompressor 14 mit dem Verbrennungsmotor 10 verbindende schaltbare Kupplung 12 dargestellt. Der Kompressor 14 hat einen Ansaugstutzen 22, über den die zu komprimierende Luft angesaugt wird. Im Bereich dieser Luftzuführung ist ein 3/2-Wegeventil 18 angeordnet, das vorliegend, wie nochmals separat dargestellt, als elektrisch vorgesteuertes Pneumatikventil ausgelegt ist. Das Pneumatikventil 18 hat einen Eingangsanschluss 110, an dem eine zu dem Kupplungsanschluss 80 führende Leitung 112 angeschlossen ist. In dieser Leitung 112 ist ein Rückschlagventil 40 angeordnet, dass eine Strömung vom Kupplungsanschluss 80 zu dem Ventil 18 zulässt und eine umgekehrte Strömung unterbindet. Das Ventil 18 hat einen Ausgangsanschluss, der über eine Leitung 116 mit einem Schalteingang 20 der Kupplung 12 gekoppelt ist. Über einen elektrischen Eingang 118 zum Zwecke der Zuführung eines Signals 16 ist das Ventil mit der elektronischen Steuerung 32 der Druckluftaufbereitungsanlage 26 sowie mit Masse, die an einem Zentralstecker 120 abgegriffen wird, verbunden.

Die Druckluftversorgungseinrichtung gemäß Figur 1 arbeitet im Hinblick auf die schaltbare Kupplung 12 wie folgt. Soll die im nicht druckangesteuerten Zustand geschlossene Kupplung 12 geöffnet werden, beispielsweise im Falle einer bereits erwähnten Regeneration, so gibt die elektronische Steuerung 32 ein Ausgangssignal 16 an das elektrisch vorgesteuerte Pneumatikventil 18. Das Ventil 18 öffnet, und es stellt auf diese Weise eine Verbindung zwischen dem Kupplungsanschluss 80 der Druckluftaufbereitungsanlage 26 und dem Schalteingang 20 der Kupplung 12 her. Durch das Belüften des Schalteingangs 20 wird die Kupplung 12 geöffnet und der Kompressor 14 zum Stehen gebracht. Zum Schließen der Kupplung 12 wird die Bestromung des elektrischen Eingangs 118 wieder ausgesetzt, so dass der Schalteingang 20 entlüftet wird. Durch die Rückschlagventile 40, 42 wird eine kurze Schaltzeit sichergestellt. Das Rückschlagventil 42 verhindert eine Rückströmung von Druckluft aus der Leitung 112 in die Richtung der Abzweigungen der Betriebsbremsanschlüsse 58, 60 und des Anschlusses für die Feststellbremse sowie den Anhänger. Das Rückschlagventil 40 verhindert zusätzlich eine Rückströmung aus der Leitung 112 zu dem Nebenverbraucheranschluss 84. Je nach der Auslegung der Anlage und den Bedürfnissen im Hinblick auf die Schaltzeit kann eines der Rückschlagventile 40, 42 ausreichend sein. Die Rückschlagventile 40, 42 stellen somit sicher, dass in der intakten Leitung 112 stets ein gewisses Druckniveau aufrechterhalten werden kann, so dass beim Umschalten des Ventils 18 ein rascher Druckaufbau am Schalteingang 20 des Kompressors 12 sichergestellt ist. Ein zusätzlicher Vorratsbehälter im Bereich der Leitung 112, mit dem man ebenfalls die Aufrechterhaltung eines solchen Druckniveaus sicherstellen könnte, ist somit entbehrlich. Zwischen dem Anschluss 80 und dem Rückschlagventil 40 können auch weitere Verbraucher angeschlossen sein, z. B. eine Abgasreinigung, eine Motorbremse und/oder eine Getriebeansteuerung.

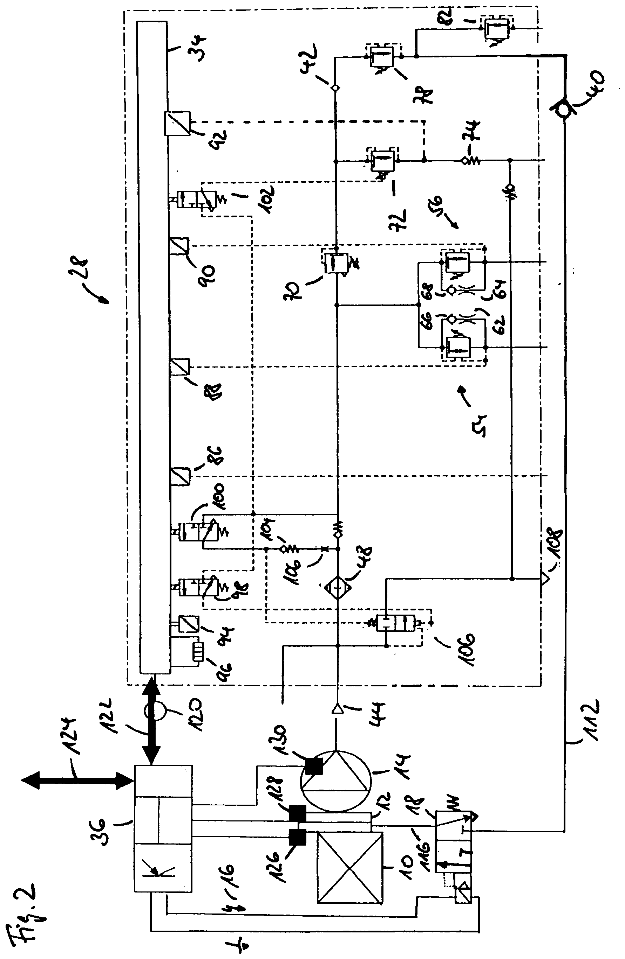

Figur 2 zeigt eine schematische Darstellung einer erfindungsgemäßen Druckluftversorgungseinrichtung. Zahlreiche Eigenschaften der Ausführungsform gemäß Figur 2 sind identisch zur Ausführungsform gemäß Figur 1, beispielsweise auch die Anordnung des elektrisch vorgesteuerten Pneumatikventils 18 im Bereich des Lufteinlasses des Kompressors 14, auch wenn dies hier nicht dargestellt ist. Im Unterschied zur Ausführungsform gemäß Figur 1 ist bei der Ausführungsform gemäß Figur 2 eine externe Steuerung 36 zusätzlich zu der elektronischen Steuerung 34 in der Druckluftaufbereitungsanlage 28 vorgesehen. Die externe Steuerung 36 ist geeignet, mit der internen Steuerung 34 über eine Schnittstelle 122, die vorzugsweise von dem Zentralstecker 120 zur Verfügung gestellt wird, zu kommunizieren. Ebenfalls ist eine Schnittstelle 124 zu sonstigen Fahrzeugkomponenten vorgesehen, beispielsweise über einen CAN-Bus zu einem Fahrzeugführungsrechner. Baulich können die Schnittstellen 122, 124 vereinigt sein. Es ist in Figur 2 weiterhin gezeigt, dass ein Drehzahlsensor 126 auf der Eingangseite der Kupplung 12 und ein weiterer Drehzahlsensor 128 auf der Ausgangsseite der Kupplung 12 angeordnet sein können. Weiterhin ist ein Temperatursensor 130 am Kompressor 14 vorgesehen. Die Signale der Sensoren 126, 128, 130 werden der externen Steuerung 36 zugeführt und von dieser im Hinblick auf die Ansteuerung des Ventils berücksichtigt, auf andere Weise verwertet, beispielsweise im Hinblick auf eine Funktionsüberwachung, und/oder in ursprünglicher oder verarbeiteter Form über die Schnittstellen 122, 124 weitergegeben.

Die nützliche Ermittlung der Drehzahlen und der Temperatur kann auch im Zusammenhang mit der Ausführungsform gemäß Figur 1 vorgesehen sein, auch wenn dies dort nicht dargestellt ist. Die entsprechenden Daten werden dann der internen Steuerung 32 der Druckluftaufbereitungsanlage 26 zugeführt.

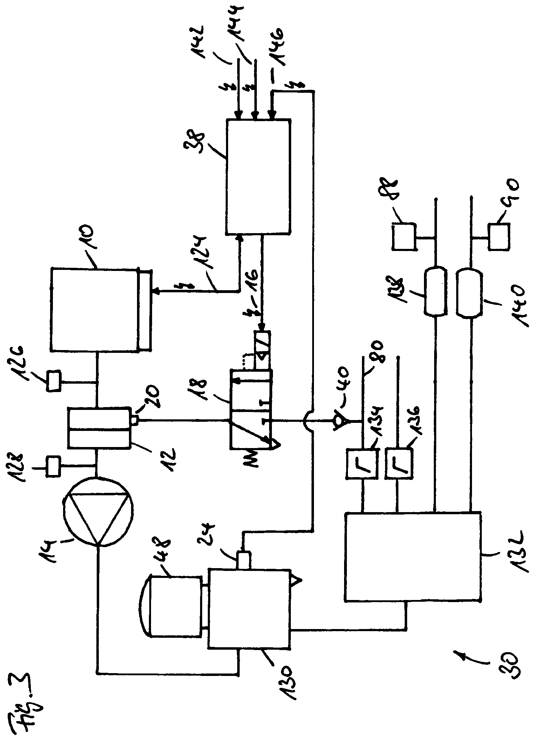

Figur 3 zeigt eine schematische Darstellung einer erfindungsgemäßen Druckluftversorgungseinrichtung. Die hier dargestellte Druckluftversorgungseinrichtung ist in der Form mehrerer verteilter Einzelbaugruppen dargestellt. Insbesondere sind ein Druckregler 130 mit aufgesetzter Filtereinheit 48, ein Mehrkreisschutzventil 132, Druckbegrenzer 134, 136 und eine elektronische Steuerung 38 dargestellt. Die Komponenten können real in der beschriebenen Weise verteilt sein. Die verteilte Darstellung kann aber auch im Sinne einer funktionalen Aufteilung verstanden werden, wobei real Druckregler, Mehrkreisschutzventil, die Druckbegrenzer und/oder die elektronische Steuerung integriert realisiert sind, beispielsweise wie im Zusammenhang mit den Figuren 1 und 2 dargestellt.

Bei der Ausführungsform gemäß Figur 3 ist wiederum ein Kompressor 14 über eine schaltbare Kupplung 12 mit einem Verbrennungsmotor 10 gekoppelt. Der Kompressor 14 liefert Druckluft an den Druckregler 130, von wo die Druckluft an das Mehrkreisschutzventil 132 weitergegeben wird. Das Mehrkreisschutzventil 132 verteilt die Druckluft auf die Behälter 138, 140 und sonstige Anschlüsse, von denen einer als ein mit einem Druckbegrenzer 136 versehener Anschluss dargestellt ist. Ein weiterer Anschluss ist der Kupplungsanschluss 80, ebenfalls über einen Druckbegrenzer 134 beliefert. Von dem Kupplungsanschluss 80 wird über das die Schaltzeiten sicherstellende Rückschlagventil 40 Druckluft an das elektrisch vorgesteuerte Pneumatikventil 18 geliefert. Die Ansteuerung des Ventils 18 erfolgt durch die elektronische Steuerung 38, die über die Schnittstelle 124 ebenfalls mit dem Verbrennungsmotor beziehungsweise mit einer Motorsteuerung kommuniziert. Die elektronische Steuerung 38 weist mehrere Eingänge 142, 144, 146 auf. Die Eingänge 142, 144 symbolisieren die Möglichkeit, der Steuerung 38 Temperatur-, Druck- und/oder Drehzahlinformation zuzuführen, beispielsweise gemessen durch die Drucksensoren 88, 90 der Betriebsbremskreise, und/oder durch die Drehzahlsensoren 126, 128 an der Eingangsseite und der Ausgangsseite der Kupplung 12. An dem Druckregler 130 ist ein Druckschalter 24 vorgesehen. Dieser steht mit dem Eingang 146 der elektronischen Steuerung 38 in Verbindung. Somit kann der elektronischen Steuerung 38 ein druckabhängiges elektrisches Signal zugeführt werden.

Die Druckluftversorgungseinrichtung gemäß Figur 3 arbeitet wie folgt. Auf der Grundlage der über die Eingänge 142, 144, 146 und die Schnittstelle 124 zur Verfügung gestellten Informationen kann die elektronische Steuerung 38 ein elektrisches Signal 16 an das Ventil 18 liefern, so dass dieses umschaltet und die Kupplung 12 aufgrund der Belüftung des Schalteingangs 20 öffnet. Die Entscheidung zur Ausgabe des Signals 16 kann nun auf der Grundlage erfolgen, dass durch Sensoren gemessene Drücke Temperaturen oder Drehzahlen ein Öffnen der Kupplung 12 erforderlich machen. Parallel hierzu kann das Öffnen der Kupplung aber auch auf der Grundlage des von dem Druckschalter 24 ausgegebenen Signals erfolgen. Erfahren Komponenten der in Figur 3 dargestellten Ausführungsform einen Defekt, so dass beispielsweise die Druckniveaus in den Betriebsbremskreisen nicht mehr zuverlässig gemessen werden, kann durch die Anwesenheit des Druckschalters 24 und der hierdurch ermöglichten Schaltfunktionalität dennoch ein Öffnen der Kupplung 12 erfolgen, was deren Zerstörung aufgrund der geschilderten Defekte verhindert.

Ebenfalls ist neben der in Figur 3 dargestellten Variante möglich, das Ausgangssignal des Druckschalters 24 direkt dem Ventil 18 zuzuführen, so dass selbst bei einem Komplettausfall der elektronischen Steuerung 38 ein Öffnen der Kupplung 12 erfolgen kann.

Auf der Grundlage von Betriebszuständen der Druckluftaufbereitungsanlage und sonstigen Fahrzeugzuständen können verschiedene Funktionen realisiert werden, die mit der pneumatisch schaltbaren Kupplung in Zusammenhang stehen. Die beschriebenen Funktionen sind ganz oder teilweise mit den anhand der Figuren 1 bis 3 beschriebenen Ausführungsformen realisierbar, wobei sich das Maß der Realisierbarkeit unmittelbar aus den nachfolgenden Ausführungen ergibt. Im Einzelnen:
Soll im Normalbetrieb die Kupplung geschlossen werden, nämlich insbesondere bei auf Einschaltdruckniveau sinkendem Systemdruck, wird das Ventil 18 geschlossen, so dass die Kupplung 12 entlüftet und somit geschlossen wird. Der Kupplungszustand wird durch das Setzen eines Flags in einer der elektronischen Steuerungen 32, 36, 34, 38 vermerkt. Voraussetzungen für diese Betriebsweise sind eine laufende Verbrennungsmaschine 10, eine eingeschaltete Zündung, das Nichtvorliegen eines Fehlerbetriebs- beziehungsweise Notlaufbetriebszustands, eine Betriebsphase außerhalb des Motorstarts und eine Betriebsphase außerhalb der Einleitung einer Zwischenregeneration der Filtereinheit 48. Die elektronischen Signale, die diese Fahrzeugzustände kennzeichnen, werden von der elektronischen Motorsteuerung, dem Fahrzeugführungsrechner, der elektronischen Steuerung der Druckluftaufbereitungsanlage und/oder einer sonstigen externen Steuerung zur Verfügung gestellt.

Ein Öffnen der Kupplung 12 im Normalbetrieb erfolgt, wenn der Systemdruck auf das Abschaltdruckniveau steigt. In diesem Fall wird das Kupplungsschaltventil 18 bestromt, so dass die Kupplung 12 belüftet und damit geöffnet wird. Das beim Schließen der Kupplung 12 gesetzte Flag wird zurückgesetzt. Weitere Fahrzeugparameter als Voraussetzung für das Öffnen der Kupplung 12 im Normalbetrieb sind insbesondere eine laufende Verbrennungskraftmaschine 10, eine eingeschaltete Zündung, das Nichtvorliegen einer Fehlerbetriebsbeziehungsweise Notlaufbetriebsphase sowie das Nichtvorliegen einer Service- beziehungsweise Werkstattbetriebsphase.

Die erfindungsgemäße Druckluftversorgungseinrichtung ist weiterhin in der Lage, eine automatische Notabschaltung dann vorzunehmen, wenn die pneumatische Ansteuerleitung der Kupplung zwischen dem Kupplungsschaltventil 18 und der Kupplung 12 ein Leck aufweist. Wird bei aktiviertem Kupplungsschaltventil und hinreichendem Betriebsdruck zum Schalten des Ventils, beispielsweise 4,5 bar, festgestellt, dass der Systemdruck abfällt, obwohl kein Kreisdefekt vorliegt und kein Hardwaredefekt in einem Fehlerspeicher gespeichert ist, so wird nach eventueller Prüfung weiterer Fahrzeugparameter auf einen Bruch der Ansteuerleitung zwischen dem Ventil und der Kupplung geschlossen. Es kann beispielsweise weiterhin geprüft werden, ob ein ungewöhnlich häufiges Umschalten der Kupplung vorliegt. Das Vorliegen eines hinreichenden Betriebsdrucks zum Schalten des Ventils 18 kann je nach Auslegung der Systeme mit einem Drucksensor gemessen werden, der den Druck im Bereich des Anhängeranschlusses misst, nämlich dann, wenn der das Ventil 18 beliefernde Ausgang mit dem selben Druckbegrenzer wie der Anhängerbremsanschluss begrenzt wird. Ebenfalls kann ein eigens für die Messung des dem Ventil 18 zugeführten Druckes geeigneter Drucksensor vorgesehen werden. Um die Wahrscheinlichkeit der korrekten Diagnose auf Bruch der pneumatischen Ansteuerleitung zu erhöhen, kann das Ventil 18 sicherheitshalber mehrfach hintereinander geschaltet werden. Bei Erkennen auf Bruch der pneumatischen Ansteuerleitung wird der Kupplungsventilbetrieb unterbrochen, das heißt die Kupplung bleibt stets geschlossen, und die Druckregelung im System erfolgt alleine über den Druckregler der Druckluftaufbereitungsanlage. Sonderfunktionen, die die Druckluftversorgungseinrichtung zusätzlich behindern würden, werden abgeschaltet, und es wird eine Warninformation gesendet, die beispielsweise das Aufleuchten einer Warnlampe bewirkt. Durch die automatische Notabschaltung wird verhindert, dass sich der "Duty-Cycle" der Kupplung in einer Weise erhöht, die das Zerstören der Kupplung bewirken würde. Im Falle der Verwendung einer elektronischen Druckluftaufbereitungsanlage mit einem in deren Steuerung gespeicherten Kennfeld im Hinblick auf die Kompressorcharakteristik, kann zusätzlich eine Druckgradientenbewertung vorgenommen werden, um diese im Hinblick auf die Diagnose und die letztlich möglicherweise erfolgende automatische Notabschaltung zu berücksichtigen.

Bei einer Leckage an anderer Stelle in der Druckluftversorgungseinrichtung, beispielsweise in einem der Kreise, erfolgt ohne zusätzliche Maßnahmen ebenfalls ein permanentes Ein- und Abschalten der Kupplung 12, was zur Zerstörung der Kupplung 12 führen würde. Dies kann frühzeitig durch die Detektion einer erhöhten Einschaltdauer der Kupplung erkannt werden und somit aufgrund der Veränderung der Schaltspanne und der damit verbundenen Zykluszeit entschärft werden. Auch in diesem Fall wird vorzugsweise eine Warnlampeninformation ausgegeben.

Eine Notabschaltung des Kupplungsbetriebs kann auch dann erfolgen, wenn der Maximaldruck im System überschritten wird. Wird trotz Ansteuerung des Kupplungssteuerventils 18 festgestellt, dass der Systemdruck einen Maximaldruck überschreitet, so wird der Kupplungsventilbetrieb abgeschaltet, und die Druckregelung erfolgt ausschließlich über das Ablassventil der Druckluftaufbereitungsanlage. Die Maximaldrucküberschreitung trotz angesteuertem Ventil 18 kann verschiedene Ursachen haben, beispielsweise einen Treiberdefekt, einen elektrischen Leitungsbruch, eine durchgebrannte Ventilspule oder beispielsweise eine defekte Kupplung.

Eine weitere sicherheitserhöhende Funktion verhindert die Vereisung des Kompressors. Bei tiefen Temperaturen wird der Kompressor während der Abschaltphase zur Zwischenförderung eingeschaltet. Wird während dieser Phasen gleichzeitig das Ablassventil der Druckluftaufbereitungsanlage geöffnet, steigt der Systemdruck nicht in unerwünschter Weise an. Ebenfalls ist es möglich, zur Realisierung dieser zusätzlichen Einschaltphasen des Kompressors 14 ein höheres Abschaltdruckniveau zuzulassen, so dass das Ablassventil in diesem Fall geschlossen bleiben kann. Ob die Funktion zur Verhinderung einer Vereisung durchzuführen ist, kann von zahlreichen Parametern abhängig gemacht werden, beispielsweise dem aktuellen Förderstatus, der Außentemperatur, die über den Fahrzeugenbus zur Verfügung steht, die Lufttrocknertemperatur, die beispielsweise im Falle einer elektronischen Luftdruckaufbereitungsanlage über einen standardmäßig vorgesehenen Temperatursensor gemessen wird, dem Verlauf der Einschaltdauer des Kompressors 14, der Verbrennungsmotortemperatur, dem Lastkollektiv des Verbrennungsmotors, sonstigen Temperaturwerten, beispielsweise am Druckstutzen des Kompressors 14, und der Fahrzeuggeschwindigkeit.

Weitere Sonderfunktionen betreffen beispielsweise den Werkstattbetrieb. Steht das Fahrzeug bei eingeschalteter Zündung, ist die Kupplung 12 belüftet, das heißt geöffnet, und der Kompressor 14 befindet sich in der Lehrlaufphase, und zeigt die Onboard- oder Offboarddiagnose den Servicebetrieb an, so wird die Kupplung 12 durch Abschalten des Kupplungsschaltventils 18 entlüftet, um bei der Montage am Kompressor die Verletzungsgefahr zu reduzieren.

Es ist weiterhin möglich, den Kupplungsschlupf auf der Grundlage von Drehzahlsensorsignalen zu überwachen. Über die elektronische Motorsteuerung stehen die Motordrehzahl und die Kompressordrehzahl bei geeigneter Sensorik zur Verfügung. Wird eine übermäßige Differenz zwischen den Drehzahlen festgestellt und können sonstige Fehler, beispielsweise ein Kreisdefekt und ein nicht ausreichender Druck für das Kupplungsschaltventil, ausgeschlossen werden, so wird der Abschaltdruck der Kupplung 12 stufenweise so weit reduziert, bis kein merklicher Schlupf mehr auftritt. Auf diese Weise kann zumindest das Vorliegen der Hilfsbremswirkung sichergestellt werden, um noch eine Werkstatt anfahren zu können. Nützlicherweise wird parallel zur Verringerung des Abschaltdruckniveaus eine Warnlampeninformation zur Verfügung gestellt.

Des Weiteren ist eine Notabschaltung bei einem mechanischen Schaden am Verbrennungsmotor 10 realisierbar, nämlich bei Kurbelwellenbruch beziehungsweise Kolben- oder Lagerfresser. Parameter für die Einleitung einer solchen Notabschaltung sind die Motordrehzahl und die Kompressordrehzahl sowie optional der Ausschluss weiterer Defekte, ähnlich wie im Fall der Kupplungsschlupfüberwachung. Wird ermittelt, dass der Druck nicht ansteigt, obwohl er dies aufgrund aktivierter Förderung eigentlich müsste, kann ein Kurbelwellenbruch vorliegen. Ein Kolbenfresser oder ein Lagerfresser kann insbesondere dann vorliegen, wenn das Drehmoment und die Temperatur ansteigen. Die Notabschaltung bewirkt das Abschalten des Kompressorbetriebs. Die Regelung erfolgt dann über den Druckregler der Druckluftaufbereitungsanlage.

Ebenfalls ist eine Notabschaltung realisierbar, wenn mit einem am Kompressor 14 vorgesehenen Temperatursensor eine Kompressormaximaltemperatur ermittelt wird. Insbesondere soll eine Notabschaltung dann erfolgen, wenn die Temperatur nahezu zu einem Schaden führen würde. Auch in diesem Fall wird der Abschaltdruck so lange verringert, bis sich die Temperatur auf einem akzeptablen Niveau stabilisiert. Als weitere Maßnahme wird der Motorlüfter über eine Anfrage an die elektronische Motorsteuerung zum Zwecke einer Zusatzkühlung eingeschaltet.

Ein weiterer Fehler kann auftreten, wenn der Kupplungskolben beim Belüften der Kupplung klemmt, beispielsweise aufgrund eines Schiefstands. Bei betätigtem Kupplungsschaltventil 18 und nicht vorliegendem Fehlerbetrieb kann somit der Systemdruck ansteigen, obwohl die Kupplung eigentlich geöffnet sein sollte. Als Gegenmaßnahme ist vorgesehen, die Druckregelung über den Druckregler der Druckluftaufbereitungsanlage vorzunehmen.

### Bezugszeichenliste

- 10: Antrieb
- 12: Kupplung
- 14: Kompressor
- 16: Signal
- 18: Ventil
- 20: Schalteingang
- 22: Frischluftzuführung
- 24: Druckschalter
- 26: Druckluftaufbereitungsanlage
- 28: Druckluftaufbereitungsanlage
- 30: Druckluftaufbereitungsanlage
- 32: elektronische Steuerung
- 34: elektronische Steuerung
- 36: elektronische Steuerung
- 38: elektronische Steuerung
- 40: Rückschlagventil
- 42: Rückschlagventil
- 44: Eingangsanschluss
- 46: Fremdbefüllungsanschluss
- 48: Filtereinheit
- 50: Rückschlagventil
- 52: Hauptversorgungsleitung
- 54: Überströmventil
- 56: Überströmventil
- 58: Anschluss Betriebsbremskreis
- 60: Anschluss Betriebsbremskreis
- 62: Drossel
- 64: Drossel
- 66: Rückschlagventil
- 68: Rückschlagventil
- 70: Druckbegrenzer
- 72: Überströmventil
- 74: Rückschlagventil
- 76: Anschluss Feststellbremse/Anhänger
- 78: Überströmventil
- 80: Anschluss Kupplung
- 82: Überströmventil
- 84: Anschluss Nebenverbraucher
- 86: Drucksensor
- 88: Drucksensor
- 90: Drucksensor
- 92: Drucksensor
- 94: Temperatursensor
- 96: Heizung
- 98: Magnetventil
- 100: Magnetventil
- 102: Magnetventil
- 104: Rückschlagventil
- 106: Ablassventil
- 108: Ablass
- 110: Eingangsanschluss
- 112: Leitung
- 114: Ausgangsanschluss
- 116: Leitung
- 118: elektrischer Eingang
- 120: Zentralstecker
- 122: Schnittstelle
- 124: Schnittstelle
- 126: Drehzahlsensor
- 128: Drehzahlsensor
- 130: Druckregler
- 132: Mehrkreisschutzventil
- 134: Druckbegrenzer
- 136: Druckbegrenzer
- 138: Behälter
- 140: Behälter
- 142: Eingang
- 144: Eingang
- 146: Eingang

## Patentansprüche

1. Druckluftversorgungseinrichtung für ein Nutzfahrzeug, mit
- einem durch einen Antrieb (10) über eine pneumatisch schaltbare Kupplung (12) antreibbaren Kompressor (14) und
- einem durch ein elektrisches Signal (16) betätigbaren Ventil (18) zum wahlweisen Zuführen von Druckluft zu einem Schalteingang (20) der Kupplung,
**dadurch gekennzeichnet, dass** das elektrische Signal von einer elektronischen Steuerung (32, 36) zur Verfügung gestellt wird, der einen Betriebszustand einer Druckluftaufbereitungsanlage (26, 28, 30) und sonstige Fahrzeugzustände kennzeichnende Signale zuführbar sind, und dass das Ventil (18) im Bereich einer Frischluftzuführung (22) zu dem Kompressor (14) angeordnet ist.

2. Druckluftversorgungseinrichtung nach Anspruch 1, **dadurch gekennzeichnet, dass** die elektronische Steuerung (32) in eine Druckluftaufbereitungsanlage (26) integriert ist.

3. Druckluftversorgungseinrichtung nach Anspruch 1, **dadurch gekennzeichnet, dass** die elektronische Steuerung (36) über eine Schnittstelle mit einer in eine Druckluftaufbereitungsanlage (28) integrierten Steuerung (34) kommuniziert.

4. Druckluftversorgungseinrichtung nach einem der vorhergehenden Ansprüche, **dadurch gekennzeichnet, dass** das elektrische Signal von einer elektronischen Steuerung (32, 34, 36, 38) zur Verfügung gestellt wird, die druckabhängige Eingangssignale empfängt.

5. Druckluftversorgungseinrichtung nach einem der vorhergehenden Ansprüche, **dadurch gekennzeichnet, dass** das elektrische Signal von einer elektronischen Steuerung (32, 36, 34, 38) zur Verfügung gestellt wird, die temperaturabhängige Eingangssignale empfängt.

6. Druckluftversorgungseinrichtung nach einem der vorhergehenden Ansprüche, **dadurch gekennzeichnet, dass** das elektrische Signal von einer elektronischen Steuerung (32, 36, 34, 38) zur Verfügung gestellt wird, die von der eingangs- und/oder ausgangsseitigen Drehzahl der Kupplung abhängige Eingangssignale empfängt.

7. Druckluftversorgungseinrichtung nach Anspruch 1 oder 2, **dadurch gekennzeichnet, dass** ein zusätzliches elektrisches Signal von einem Druckschalter (24) zur Verfügung gestellt wird, der auf einen Druck in einer Druckluftaufbereitungsanlage (26, 28, 30) anspricht.

8. Druckluftversorgungseinrichtung nach Anspruch 1, **dadurch gekennzeichnet, dass** das Ventil (18) ein elektrisch vorsteuerbares Pneumatikventil ist.

9. Druckluftversorgungseinrichtung nach einem der vorhergehenden Ansprüche, **dadurch gekennzeichnet, dass** die dem Schalteingang (20) über das Ventil (18) zugeführte Druckluft einer Druckluftaufbereitungsanlage (26, 28, 30) über ein Rückschlagventil (40, 42) entnom-men wird.

10. Druckluftversorgungseinrichtung nach Anspruch 8, **dadurch gekennzeichnet, dass** das Rückschlagventil (42) in die Druckluftaufbereitungsanlage (26, 28, 30) integriert ist.

11. Nutzfahrzeug mit einer Druckluftversorgungseinrichtung nach einem der vorhergehenden Ansprüche.

## Claims

1. A compressed air supply system for a utility vehicle, comprising
- a compressor (14) drivable by a drive (10) via a pneumatically switchable coupling (12), and
- a valve (18), actuatable by an electrical signal (16), for selective delivery of compressed air to a switching input (20) of the coupling,
**characterized in that** the electrical signal is made available by an electronic control (32, 36) which can be fed with signals characterizing an operating state of a compressed air preparation plant (26, 28, 30) and other vehicle states, and that the valve (18) is arranged in the area of a fresh air supply (22) to the compressor (14).

2. The compressed air supply system according to claim 1, **characterized in that** the electronic control (32) is integrated into a compressed air preparation plant (26).

3. The compressed air supply system according to claim 1, **characterized in that** the electronic control (36) communicates via an interface with a control (34) integrated into a compressed air preparation plant (28).

4. The compressed air supply system according to any one of the preceding claims, **characterized in that** the electrical signal is made available by an electronic control (32, 34, 36, 38) which receives pressure-dependent input signals.

5. The compressed air supply system according to any one of the preceding claims, **characterized in that** the electrical signal is made available by an electronic control (32, 36, 34, 38) which receives temperature-dependent input signals.

6. The compressed air supply system according to any one of the preceding claims, **characterized in that** the electrical signal is made available by an electronic control (32, 36, 34, 38) which receives input signals dependent on the input-side and/or output-side rotational speed of the coupling.

7. The compressed air supply system according to claim 1 or 2, **characterized in that** an additional electrical signal is made available by a pressure switch (24) which responds to a pressure in a compressed air preparation plant (26, 28, 30).

8. The compressed air supply system according to claim 1, **characterized in that** the valve (18) is an electrically pivot-controllable pneumatic valve.

9. The compressed air supply system according to any one of the preceding claims, **characterized in that** the compressed air delivered to the switching input (20) via the valve (18) is extracted from a compressed air preparation plant (26, 28, 30) via a non-return valve (40, 42).

10. The compressed air supply system according to claim 8, **characterized in that** the non-return valve (42) is integrated into the compressed air preparation plant (26, 28, 30).

11. A utility vehicle comprising a compressed air supply system according to any one of the preceding claims.

## Revendications

1. Dispositif d'alimentation en air comprimé pour un véhicule utilitaire, comprenant
- un compresseur (14) pouvant être entraîné par un entraînement (10) via un accouplement (12) commutable pneumatiquement et
- une vanne (18) pouvant être actionnée par un signal électrique (16) pour l'amenée facultative d'air comprimé à une entrée de commutation (20) de l'accouplement,
**caractérisé en ce que** le signal électrique est mis à disposition par une commande électronique (32, 36) à laquelle des signaux caractérisant un état de fonctionnement d'une installation de traitement d'air comprimé (26, 28, 30) et d'autres états de véhicule peuvent être amenés, et **en ce que** la vanne (18) est disposée dans la zone d'une arrivée d'air frais (22) au compresseur (14).

2. Dispositif d'alimentation en air comprimé selon la revendication 1, **caractérisé en ce que** la commande électronique (32) est intégrée dans une installation de traitement d'air comprimé (26).

3. Dispositif d'alimentation en air comprimé selon la revendication 1, **caractérisé en ce que** la commande électronique (36) communique via une interface avec une commande (34) intégrée dans une installation de traitement d'air comprimé (28).

4. Dispositif d'alimentation en air comprimé selon l'une des revendications précédentes, **caractérisé en ce que** le signal électrique est mis à disposition par une commande électronique (32, 34, 36, 38) qui reçoit des signaux d'entrée dépendant de la pression.

5. Dispositif d'alimentation en air comprimé selon l'une des revendications précédentes, **caractérisé en ce que** le signal électrique est mis à disposition par une commande électronique (32, 36, 34, 38) qui reçoit des signaux d'entrée dépendant de la température.

6. Dispositif d'alimentation en air comprimé selon l'une des revendications précédentes, **caractérisé en ce que** le signal électrique est mis à disposition par une commande électronique (32, 36, 34, 38) qui reçoit des signaux d'entrée dépendant de la vitesse de rotation côté entrée et/ou côté sortie de l'accouplement.

7. Dispositif d'alimentation en air comprimé selon la revendication 1 ou 2, **caractérisé en ce qu'**un signal électrique supplémentaire est mis à disposition par un pressostat (24) qui réagit à une pression dans une installation de traitement d'air comprimé (26, 28, 30).

8. Dispositif d'alimentation en air comprimé selon la revendication 1, **caractérisé en ce que** la vanne (18) est une vanne pneumatique pouvant être précommandée électriquement.

9. Dispositif d'alimentation en air comprimé selon l'une des revendications précédentes, **caractérisé en ce que** l'air comprimé amené à l'entrée de commutation (20) via la vanne (18) est prélevé d'une installation de traitement d'air comprimé (26, 28, 30) via une vanne anti-retour (40, 42).

10. Dispositif d'alimentation en air comprimé selon la revendication 8, **caractérisé en ce que** la vanne anti-retour (42) est intégrée dans une installation de traitement d'air comprimé (26, 28, 30).

11. Véhicule utilitaire comprenant un dispositif d'alimentation en air comprimé selon l'une des revendications précédentes.
